# FASCICULE DE BREVET EUROPEEN

(11) **EP 1 110 823 B1**
(45) Date de publication et mention de la délivrance du brevet: **02.04.2003**
(21) Numéro de dépôt: 00403446.8
(22) Date de dépôt: 08.12.2000
(51) Int. Cl.: B60R 21/18

(54) **Assemblage de ceinture de sécurité avec un coussin gonflable amovible**
Sicherheitsgurtvorrichtung mit einem abnehmbaren Gassack
Safety belt assembly with a removable airbag

(30) Priorité: 23.12.1999 FR 9916346
(43) Date de publication de la demande: 27.06.2001
(73) Titulaire: Renault s.a.s., 92100 Boulogne Billancourt (FR)
(72) Inventeur: Chamouard, Francois, 78960 Voisins le Bretonneux (FR)

(56) Documents cités:
- FR-A- 2 773 755
- GB-A- 2 262 720
- US-A- 5 062 662
- US-A- 5 597 178
- US-A- 5 863 065

## Description

La présente invention concerne un équipement de sécurité pour la protection d'un passager occupant un siège de véhicule automobile.

L'invention concerne plus particulièrement un équipement de sécurité du type comportant, en combinaison, une ceinture de sécurité et un coussin gonflable en cas de collision frontale destiné à équiper un siège de véhicule automobile.

Il a déjà été proposé, par exemple dans les documents US-A-5.062.662 ou US-A-5.597.178, d'associer un coussin gonflable à une ceinture de sécurité.

Dans ces deux documents, le coussin gonflable est porté par la sangle de la ceinture de sécurité et il peut être associé soit au brin ventral de cette dernière soit au brin diagonal, ou baudrier, dans le cas d'une ceinture à trois points de fixation.

Une telle conception permet d'améliorer la protection des passagers en cas de collision, mais elle né prend pas en compte le fait que les sièges sont souvent occupés par des enfants.

En particulier, tous les systèmes complémentaires de retenue et de maintien des enfants sont actuellement maintenus par la ceinture de sécurité ou, dans l'avenir, seront fixés à des points de fixation définis par la norme internationale "ISOFIX".

La présence éventuelle d'un coussin gonflable a effet frontal rend l'occupation d'un siège un enfant potentiellement dangereuse et il est alors obligatoirement nécessaire de prévoir une possibilité d'inhibition des moyens de gonflage du coussin gonflable lors de l'utilisation de systèmes de retenue et de maintien d'enfants et/ou lors de l'occupation des sièges par des enfants.

Par ailleurs, la ceinture de sécurité, peut aussi servir à attacher et à retenir un enfant sur une rehausse posée sur l'élément d'assise du siège.

Lorsque le coussin gonflable est porté par le brin ventral de la sangle de ceinture, l'épaisseur de celle-ci est augmentée localement d'environ 30 millimètres, ce qui est incompatible avec les guides de la sangle ventrale incorporés aux sièges ou rehausses d'enfants.

Une première solution consiste à prévoir des moyens de détection du poids et/ou de la taille des occupants des sièges mais de tels moyens sont de conception complexe, coûteuse et leur fiabilité n'est pas totale.

Dans le cas des véhicules équipés de points de fixation selon la normale "ISOFIX", des moyens d'inhibition peuvent être associés aux fixations, mais les problèmes mentionnés précédemment pour les véhicules actuels dans lesquels les moyens de retenue des enfants sont maintenus par la ceinture de sécurité ne se trouvent pas résolus.

Afin de remédier à ces inconvénients, on a déjà proposé dans le document FR-A-2.773.755 un équipement de sécurité pour la protection d'un passager occupant un siège de véhicule automobile, du type comportant :
- une ceinture de sécurité avec une sangle dont la première et la seconde extrémités peuvent être ancrées à la structure du véhicule et dont une partie intermédiaire est susceptible d'occuper une position de rangement et une position d'utilisation dans laquelle elle s'étend le long d'une partie du corps du passager ; et
- un coussin, gonflable pour retenir le passager en cas de collision, qui est porté par un support qui est mobile entre une position de rangement et une position d'utilisation dans laquelle le support et le coussin dégonflé s'étendent le long d'une partie du corps du passager ;
et du type dans lequel le support du coussin gonflable est une bande souple indépendante de la sangle de ceinture dont une première extrémité est ancrée à la structure du véhicule et dont une partie intermédiaire, en position d'utilisation du coussin gonflable, s'étend le long d'une partie du corps du passager.

Cette conception n'est pas entièrement satisfaisante, notamment en ce qu'elle est encombrante pour le passager, complique l'utilisation et nuit au confort de la ceinture en position d'utilisation du coussin gonflable.

L'invention propose un perfectionnement de cette conception selon lequel l'équipement est caractérisé en ce que la bande souple de support du coussin gonflable est munie, au voisinage de sa seconde extrémité libre, d'un pêne, ou d'une gâche, de raccordement qui, en position d'utilisation du coussin, est reçu de manière libérable dans une gâche, ou respectivement sur un pêne, agencée à la seconde extrémité de la sangle de ceinture, et en ce que la structure du véhicule comporte un pêne, ou respectivement une gâche, fixe d'ancrage de la seconde extrémité de la sangle de ceinture qui est reçu de manière libérable dans ladite gâche, ou respectivement sur ledit pêne, d'extrémité de la sangle de ceinture lorsque le coussin gonflable n'est pas en position d'utilisation.

Grâce à cette conception, en position d'utilisation du coussin gonflable, la bande souple de support du coussin gonflable constitue un tronçon proprement dit de la ceinture de sécurité, c'est-à-dire qu'il n'est plus agencé "en parallèle" du brin ventral de la sangle de ceinture comme dans le document mentionné ci-dessus, mais "en série" avec ce brin ventral.

Selon d'autres caractéristiques de l'invention :
- les moyens de gonflage du coussin sont inhibés lorsque le coussin n'est pas en position d'utilisation ;
- le pêne, ou respectivement la gâche, fixe d'ancrage de la seconde extrémité de la sangle de ceinture est associé à des moyens qui commandent l'inhibition des moyens de gonflage lorsqu'il est reçu de manière libérable dans ladite gâche, ou respectivement sur ledit pêne, d'extrémité de la sangle de ceinture ;
- en position de rangement du coussin gonflable, le pêne, ou respectivement la gâche, de raccordement porté par la bande de support est accroché sur un élément fixe de rangement fixé à la structure du véhicule, ou du siège ;
- la bande souple de support du coussin est munie d'une gâche de raccordement qui ne peut être désolidarisée du pêne complémentaire agencée à la seconde extrémité de la sangle que lorsque la gâche de raccordement est accrochée sur l'élément fixe de rangement ;
- l'élément fixe de rangement est fixé sur la face interne d'un pied vertical de la structure du véhicule en un point qui est décalé verticalement au-dessus du point d'ancrage de la première extrémité de la bande souple de support du coussin gonflable, de manière que, en position de rangement, ce dernier s'étende sensiblement verticalement le long de la face interne du pied ;
- la face interne du pied vertical comporte un logement de rangement du coussin gonflable ;
- le pêne, ou respectivement la gâche, fixe d'ancrage de la seconde extrémité de la sangle de ceinture est fixé sur la face interne du pied vertical à proximité du point d'ancrage de la première extrémité de la bande souple de support du coussin gonflable ;
- le pêne, ou respectivement la gâche, fixe d'ancrage de la seconde extrémité de la sangle de ceinture est fixé sur un élément de la structure du siège ;
- en position d'utilisation du coussin gonflable, la bande de support du coussin gonflable constitue un tronçon d'un brin ventral de la ceinture de sécurité ;
- la ceinture de sécurité comporte un pêne d'accrochage de la ceinture de sécurité en position d'utilisation dont le corps est traversé par la sangle et qui est prévu pour être reçu de manière libérable dans une gâche fixée à la structure du véhicule ;
- la première extrémité de la sangle de ceinture est associée à un dispositif de mise sous-tension de la sangle ;
- la sangle est mise sous tension selon un effort réglable au moins entre une valeur supérieure d'utilisation de la ceinture de sécurité sans le coussin gonflable et une valeur inférieure d'utilisation combinée de la ceinture de sécurité et du coussin gonflable, et le réglage de cette valeur est effectué automatiquement en fonction de l'état d'inhibition ou d'activation des moyens de gonflage du coussin gonflable.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un siège de véhicule automobile muni d'un équipement de sécurité conforme à un premier mode de réalisation de l'invention et sur laquelle la ceinture de sécurité est illustrée en position d'utilisation et le coussin gonflable est illustré en position de rangement ;
- la figure 2 est une vue similaire à celle de la figure 1 sur laquelle la ceinture de sécurité et le coussin gonflable sont illustrés tous les deux en position d'utilisation ;
- la figure 3 est une vue de détail à plus grande échelle qui représente le coussin gonflable en position de rangement avec l'agencement de rangement du coussin aménagé dans un pied vertical du véhicule dont le volet de fermeture est en position haute ouverte ;
- la figure 4 est une vue similaire à celle de la figure 3 sur laquelle le volet est représenté en position basse fermée ;
- les figures 5 à 7 sont des vues similaires à celles des figures 1 à 3 qui illustrent un deuxième mode de réalisation de l'invention ;
- la figure 8 est une vue de détail à plus grande échelle qui illustre le boîtier pour l'accrochage en position rangée de la gâche de raccordement du coussin gonflable représentée aux figures 5 à 7;
- la figure 9 est une vue de détail, à plus grande échelle et en section partielle par un plan vertical médian, de l'agencement de la gâche de raccordement dans son support d'accrochage pour illustrer la commande du déverrouillage automatique de la gâche.

Dans la description qui va suivre, des éléments ou composants identiques, similaires ou analogues, du point de vue structurel ou fonctionnel, seront désignés par les mêmes chiffres de référence.

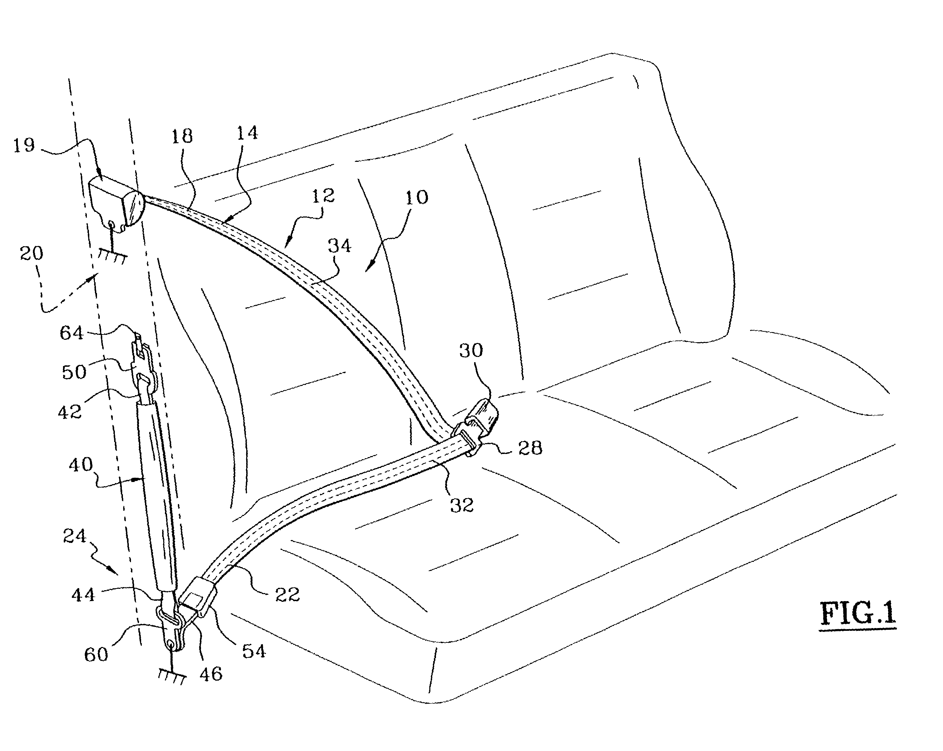

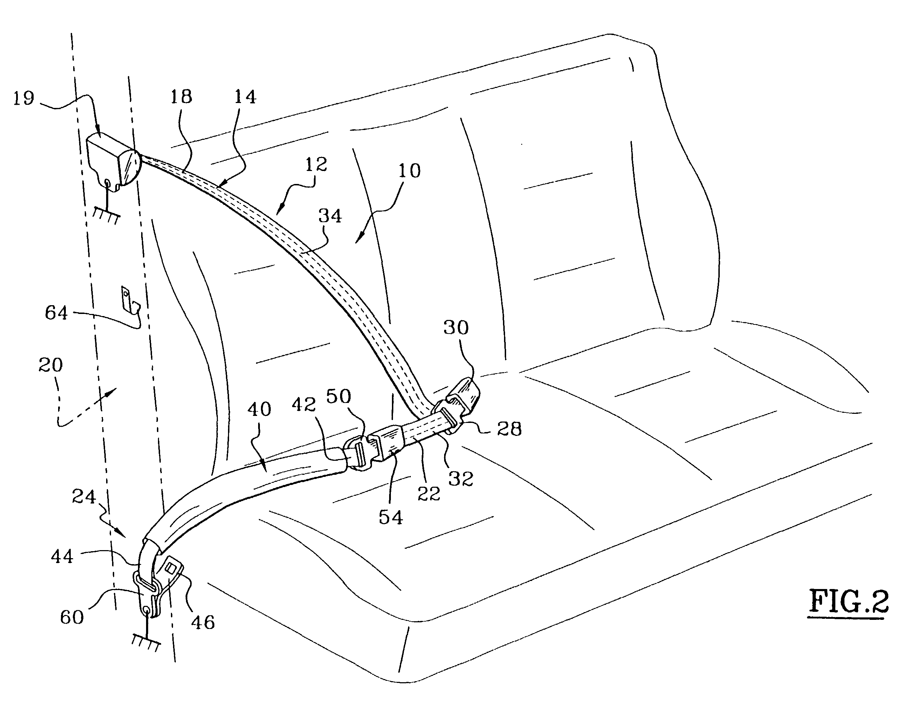

On a représenté schématiquement aux figures 1 et 2 un siège 10 de véhicule automobile, qui est ici une banquette, dont l'une des places est munie d'un équipement de sécurité 12 conforme aux enseignements de l'invention.

D'une manière connue, l'équipement de sécurité 12 comporte une ceinture de sécurité 14 qui est une ceinture de sécurité de conception classique, dite à trois points, qui comporte une sangle 16 dont une première extrémité 18 est ancrée sur la structure du véhicule en un point fixe supérieur.

Cette première extrémité peut être ancrée par l'intermédiaire d'un dispositif 19, de conception connue, de mise sous tension de la ceinture, avec ou sans renvoi.

La seconde extrémité 22 de la sangle 16 de la ceinture de sécurité 14 est prévue pour être ancrée sur la structure du véhicule en un point fixe 24 qui est ici un point fixe bas appartenant à un élément de structure de caisse du véhicule constitué par un pied vertical 20 adjacent ou voisin de la face latérale de droite du siège 10. A titre de variante non illustrée, le point d'ancrage fixe peut appartenir à l'armature du siège, notamment lorsque la position longitudinale de celui-ci est réglable.

Selon une conception connue, la sangle 16 passe de manière coulissante dans le corps 28 d'un pêne de ceinture qui, dans la position d'utilisation de la ceinture illustrée aux figures 1 et 2, est reçu, de manière libérable, dans une gâche d'accrochage 30 fixée à la structure de la caisse du véhicule.

Grâce à cet agencement, en position d'utilisation de la ceinture de sécurité, un brin ventral 32 de la ceinture s'étend sensiblement horizontalement devant le passager (non représenté), tandis qu'un brin vertical 34 orienté en diagonale, aussi appelé baudrier, s'étend devant le torse du passager en direction du point supérieur d'ancrage de la première extrémité 18 de la sangle 16, ou en direction d'un point supérieur de renvoi (non représenté) lorsque la ceinture comporte un tel point associé à un dispositif de mise sous tension.

Conformément aux enseignements du document FR-A-2.773.755, l'équipement de sécurité 12 comporte aussi un coussin gonflable 40 qui, à l'état dégonflé illustré sur les figures, se présente globalement sous la forme d'un bandeau allongé.

Le coussin gonflable 40 est ainsi globalement indépendant de la ceinture de sécurité 14.

A cet effet, le coussin gonflable 40 comporte une bande souple de support 42, qui peut être un élément de support indépendant ou qui peut être intégrée à la structure même du coussin gonflable 40, cette bande étant structurellement de la même constitution que la sangle 16 afin, comme on le verra par la suite, de pouvoir constituer structurellement et fonctionnellement un tronçon de ceinture lorsque le coussin est en position d'utilisation.

Une première extrémité 44 de la bande souple de support 42 est fixée à la structure du véhicule.

A proximité de cette extrémité 44, il est prévu un générateur de gonflage du coussin 40 auquel il est relié par un tuyau 39 et qui, selon une conception connue, est commandé automatiquement par un circuit (non représenté) de commande du gonflage en cas de collision.

La seconde extrémité libre 48 de la bande souple 42 est équipée d'un pêne 50 de raccordement qui, dans la position de rangement illustrée à la figure 1, est accroché sur un crochet fixe 64 qui est porté par le pied 20.

Dans la position de rangement illustrée à la figure 1, le coussin gonflable 40 s'étend donc sensiblement verticalement le long de la face interne du pied vertical 20.

Dans l'exemple illustré sur les figures, le coussin gonflable 40 est prévu pour s'étendre, en position d'utilisation, dans le prolongement du brin ventral 32 de la ceinture de sécurité 14, c'est-à-dire en position horizontale.

A cet effet, la seconde extrémité libre 22 de la sangle 16, et donc du brin ventral 32 de la ceinture de sécurité 14 comporte une gâche 54, de conception identique à celle de la gâche 30, dans laquelle le pêne de raccordement 50 du coussin gonflable peut être emboîté élastiquement pour réaliser le raccordement de l'extrémité libre 48 du coussin gonflable 40 à la sangle 16, comme on peut le voir à la figure 2.

Lorsque l'on ne souhaite pas utiliser le coussin gonflable, et afin de disposer d'une ceinture de sécurité "classique" à trois points, la structure de caisse du véhicule comporte un pêne fixe d'ancrage 46 qui constitue le point d'ancrage fixe bas 24 et sur lequel le passager emboîte élastiquement dans la gâche 54 comme cela est illustré à la figure 1.

Le changement de configuration de la ceinture, c'est-à-dire sans ou avec coussin gonflable, est particulièrement simple pour le passager dans la mesure où il lui suffit de libérer la gâche 54 du pêne fixe d'ancrage 46 pour venir y emboîter le pêne 50 de raccordement de la bande souple 42 du coussin gonflable pour utiliser ce dernier, ou de procéder de manière inverse dans le cas contraire.

Conformément à l'une des caractéristiques de l'invention, les moyens de gonflage du coussin sont inhibés lorsque le coussin n'est pas en position d'utilisation, c'est-à-dire lorsque la gâche 54 n'est pas emboîtée et ancrée sur le pêne fixe d'ancrage 46.

A cet effet, il est par exemple possible de prévoir un commutateur (non représenté sur les figures) sur le pêne fixe d'ancrage 46 qui est relié à l'unité de commande du générateur de gonflage.

Le commutateur est par exemple du type normalement fermé et il n'est ouvert que lorsque la gâche 54 est en position sur le pêne 46. A l'état fermé, le commutateur transmet un signal d'activation au circuit de commande du générateur de manière que, en cas de collision, le circuit de commande provoque un gonflage instantané du coussin gonflable 40 en position d'utilisation.

Au contraire, lorsque la sangle n'est pas directement ancrée sur le pêne fixe 46, le circuit de commande ne peut pas provoquer le gonflage du coussin gonflable 40.

Il est aussi possible d'agencer un commutateur de sécurité dans la gâche 54 de manière à éviter que le passager utilise la ceinture de sécurité sans avoir préalablement raccordé la gâche 54 au pêne fixe 46 ou au pêne de raccordement 50, c'est à dire pour éviter qu'il utilise la ceinture sans brin ventral, un tel commutateur de sécurité pouvant être relié à un circuit d'alarme visuelle ou sonore.

Le coussin gonflable, par exemple au voisinage de son extrémité libre 48, peut être muni de moyens d'indication aux utilisateurs de son mode d'emploi, en indiquant notamment de manière explicite son incompatibilité d'emploi avec les systèmes de retenue pour les enfants tels que des sièges complémentaires et/ou des coussins additionnels.

En cas d'occupation de la place par un enfant, avec notamment des moyens additionnels de retenue de l'enfant, le coussin gonflable ne doit pas être utilisé et il doit impérativement occuper sa position de rangement illustrée à la figure 1, le témoin indiquant alors visuellement aux utilisateurs l'état d'inhibition des moyens de gonflage du coussin gonflable 40.

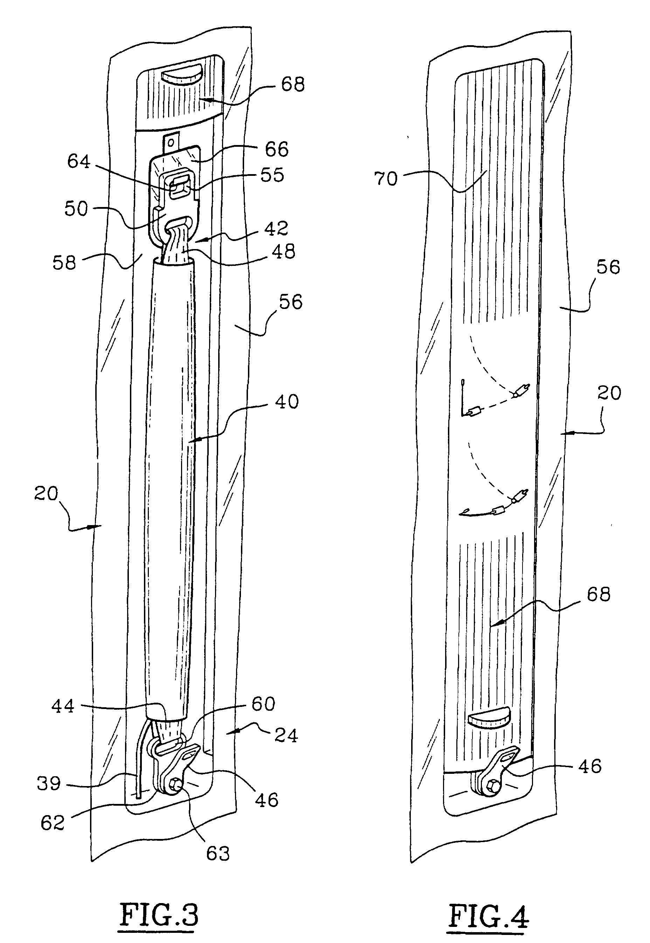

Une telle conception a bien entendu pour inconvénient qu'un passager adulte occupant la place après un enfant pourrait ne pas fixer à nouveau le coussin gonflable 40 dans sa position d'utilisation illustrée aux figures 2 et 3.

Il est possible de remédier à cet inconvénient en asservissant la valeur de l'effort de maintien exercé par la ceinture en prévoyant par exemple de faire appel à des moyens réglables 19 de mise sous tension de la ceinture de sécurité 14 présentant au moins deux niveaux ou valeurs de réglage de l'effort de retenue exercé par la ceinture.

Selon que les moyens de gonflage du coussin gonflable 40 sont dans leur état d'inhibition ou d'activation, le circuit de commande du gonflage intervient pour asservir la valeur de l'effort de retenue exercé par la ceinture de manière à garantir dans tous les cas un niveau de sécurité suffisant pour le passager en cas de collision.

On décrira maintenant les détails de conception de l'agencement selon l'invention permettant notamment le rangement du coussin gonflable.

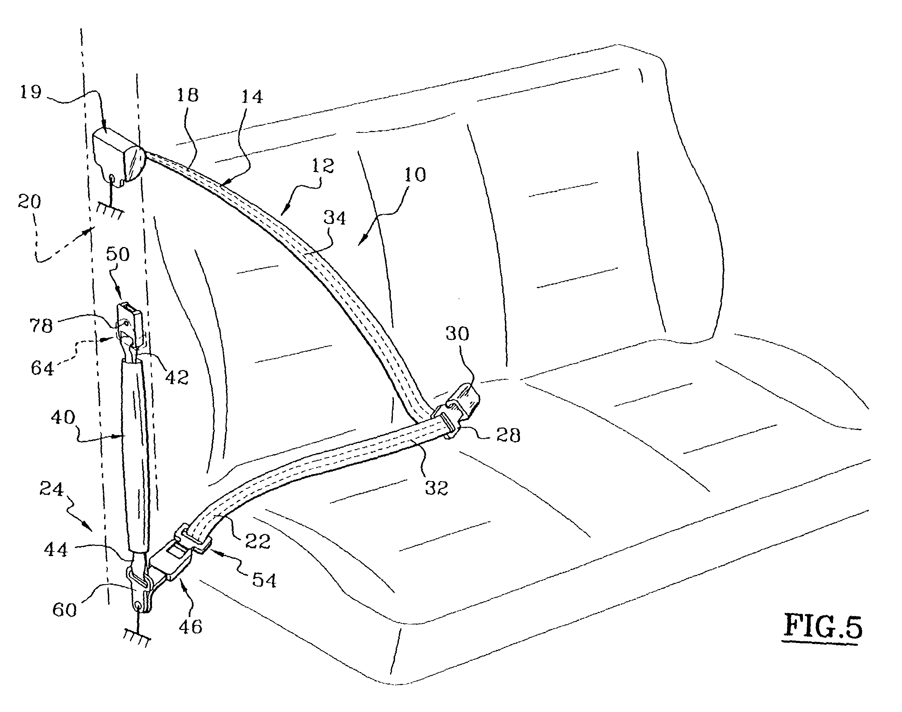

Comme on peut le voir notamment aux figures 4 et 5, la face latérale interne 56 du pied vertical 20 comporte à sa partie inférieure un évidement ou logement 58 qui s'étend verticalement.

La première extrémité inférieure 44 de la bande souple 42 est cousue autour d'une ferrure 60 en forme de plaque évidée et dont la partie inférieure 62 est fixée au pied 20, dans le fond du logement 58, et est traversée par une vis transversale de fixation 63qui assure également la fixation rigide du pêne inférieur fixe 46 d'ancrage qui est conformé de manière à faire saillie transversalement à l'extérieur du logement 58 pour faciliter l'accrochage éventuel de la gâche 54 sur celui-ci.

L'extrémité supérieure libre 48 de la bande souple 42 est cousue autour de la partie inférieure du corps du pêne de raccordement 50 dont la partie supérieure formant pêne proprement dit est trouée pour son engagement dans la gâche 54. Ce trou 55 permet aussi d'accrocher le pêne 50 sur un crochet fixe 64 qui est agencé à la partie supérieure du logement 58. Le crochet 64 est par exemple une pièce en matière plastique.

Comme on peut le voir à la figure 3, en position de rangement du coussin gonflable avec le pêne 50 en position accrochée sur le crochet 64, le coussin s'étend verticalement à l'intérieur du logement 58.

Pour améliorer le confort du passager lorsqu'il utilise le coussin gonflable 40, il est prévu une languette de protection 66 qui s'étend sous le corps du pêne 50 et au-delà de ce dernier de manière que l'ensemble de raccordement constitué par le pêne 50 emboîté dans la gâche 54 ne frotte pas directement contre la partie en regard du corps du passager, notamment ses cuisses.

Conformément à un autre aspect de l'invention, et comme on peut le voir notamment à la figure 4, il est prévu un volet coulissant 68 pour fermer le logement 58 et notamment pour masquer le coussin gonflable 40 lorsqu'il est en position de rangement.

Le volet 68 est de préférence monté coulissant de manière à s'escamoter verticalement en position haute à l'intérieur du pied 20 lorsque l'on désire accéder au logement 58, et notamment au coussin 40.

En position basse fermée du volet 68, comme on peut le voir à la figure 4, le pêne fixe d'ancrage 46 fait bien entendu saillie à l'extérieur du logement 58 en s'étendant sous le bord inférieur du volet.

La face externe 70 du volet 68 peut comporter des indications et des pictogrammes indiquant la présence du coussin gonflable et donnant aux passagers des indications relatives à ses conditions d'utilisation et à son mode d'emploi.

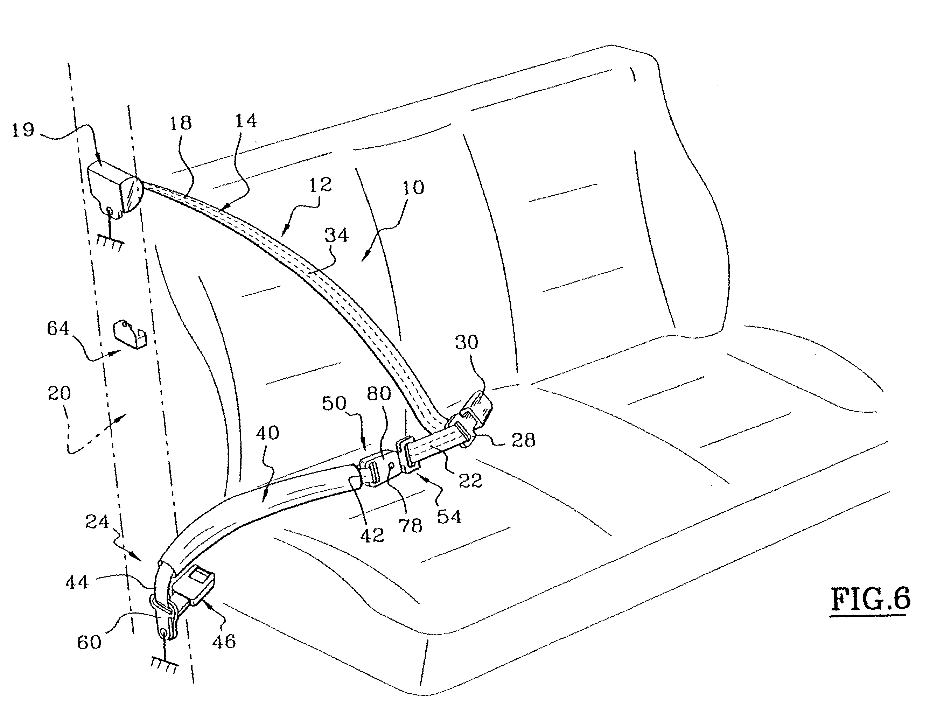

On décrira maintenant le second mode de réalisation en référence aux figures 5 à 9.

Par rapport au précédent mode de réalisation représenté aux figures 1 à 4, ce mode de réalisation consiste principalement en une inversion entre l'élément de raccordement fixé à la seconde extrémité libre 48 de la bande souple 42 du coussin gonflable et l'élément complémentaire 54 agencé à la seconde extrémité libre 22 de la sangle 16.

Dans ce second mode de réalisation, l'élément de raccordement est une gâche 50, tandis que son élément complémentaire est un pêne 54 porté par la sangle de la ceinture.

Bien entendu, afin de permettre l'utilisation du coussin gonflable en série, comme dans le premier mode de réalisation, l'élément inférieur fixe d'accrochage, qui était précédemment un pêne fixe d'ancrage 46, est désormais une gâche fixe d'ancrage 46 dans laquelle peut être introduit le pêne 54 comme on peut le voir à la figure 5.

Pour le rangement du coussin gonflable 40, il est bien entendu nécessaire de prévoir des moyens 64 d'accrochage qui sont complémentaires de la gâche de raccordement 50.

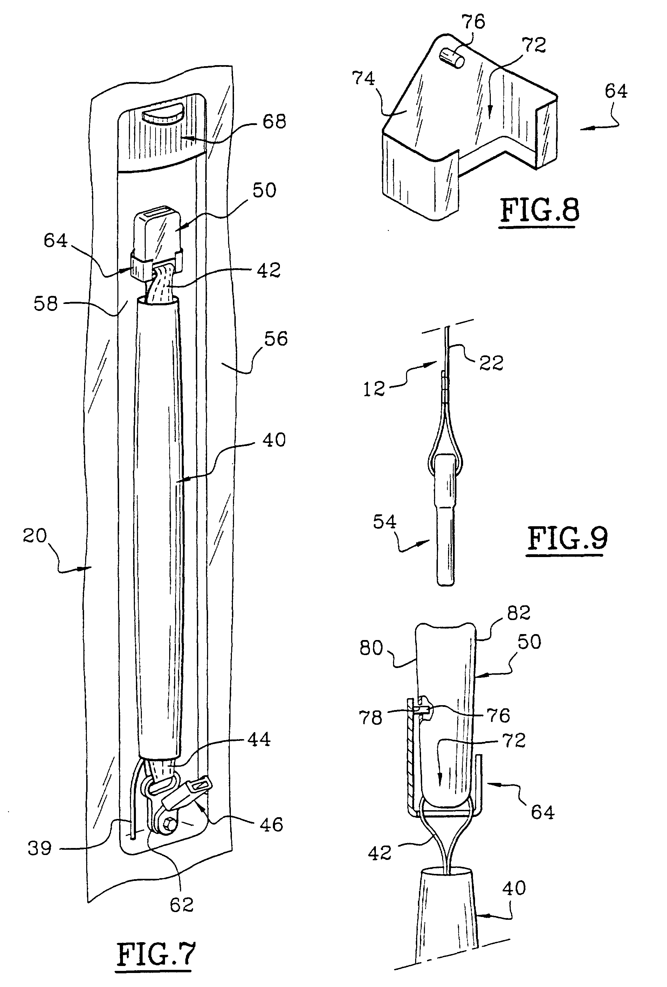

Comme on peut le voir notamment aux figures 7 à 9, les moyens d'accrochage 64 sont constitués par un boîtier d'accrochage qui délimite un logement 72 ouvert verticalement vers le haut, ainsi que vers le bas pour le passage de la bande souple de support 42.

Afin de garantir une manipulation correcte et la plus fiable possible de l'équipement de sécurité selon l'invention, et notamment afin de garantir que l'utilisateur du siège correspondant ne désolidarise le coussin gonflable 40 de la ceinture de sécurité 12 qu'à bon escient, c'est-à-dire en vue de l'utilisation d'un siège ou coussin supplémentaire pour enfant, la gâche de raccordement 50 n'est pas du même type que celles utilisées pour les ceintures de sécurité, et par exemple du même type que la gâche 30.

En effet, une gâche classique telle que la gâche 30, aussi appelée boucle de ceinture, comporte un levier ou un bouton de commande manuelle permettant son ouverture, c'est-à-dire permettant de la désolidariser du pêne complémentaire 28 lorsque l'on désire "déboucler" la ceinture de sécurité.

Au contraire, la gâche 50 de raccordement du coussin gonflable 40 ne peut pas être ouverte ou déverrouillée manuellement par le doigt de l'utilisateur.

Son ouverture ou déverrouillage n'est possible que lorsqu'elle est mise en place dans son boîtier de rangement 64 dont la paroi verticale 74 comporte à cet effet un doigt ou pion 76 de déverrouillage qui est prévu pour être reçu à travers un trou complémentaire 78 formé dans la face latérale correspondante 80 de la gâche 50, l'introduction du doigt 78 à l'intérieur de la gâche 50 provoquant son déverrouillage pour libérer et permettre l'extraction du pêne 54 qui équipe la ceinture de sécurité.

Au cas ou l'utilisateur ne met pas la gâche 50 correctement en place dans le boîtier d'accrochage 64, le doigt 76 vient buter contre l'autre face 82 de la gâche en empêchant un rangement correct de cette dernière, ce défaut étant perçu au moins visuellement par l'utilisateur et/ou pouvant aboutir à l'impossibilité de ranger la gâche 50 dans le boîtier 54.

L'invention n'est pas limitée aux cas dans lesquels certains des points d'ancrage et d'accrochage de la ceinture de sécurité 14 et du coussin gonflable 40 appartiennent à la structure de la caisse du véhicule, tous ces points pouvant être intégrés au siège proprement dit et/ou à un caisson inférieur du siège.

L'invention trouve à s'appliquer pour l'équipement de sécurité de toutes les places d'un véhicule automobile, avant ou arrière, et quelle que soit l'orientation de ces places.

L'invention trouve aussi à s'appliquer dans le cas d'un coussin gonflable amovible d'orientation globalement en diagonale, c'est-à-dire adjacent au brin 34 de la ceinture de sécurité 14.

## Revendications

1. Equipement de sécurité (12) pour la protection d'un passager occupant un siège (10) de véhicule automobile, du type comportant :
- une ceinture de sécurité (14) avec une sangle (16) dont la première et la seconde extrémités (18, 22) peuvent être ancrées à la structure du véhicule et dont une partie intermédiaire (32, 34) est susceptible d'occuper une position de rangement et une position d'utilisation dans laquelle elle s'étend le long d'une partie du corps du passager ; et
- un coussin (40), gonflable pour retenir le passager en cas de collision, qui est porté par un support qui est mobile entre une position de rangement et une position d'utilisation dans laquelle le support et le coussin (40) dégonfléss'étendent le long d'une partie du corps du passager; et du type dans lequel le support du coussin gonflable est une bande souple (42) indépendante de la sangle (16) de ceinture (14) dont une première extrémité (44) est ancrée à la structure du véhicule, au pied ou à l'armature du siège, et dont une partie intermédiaire, en position d'utilisation du coussin gonflable, s'étend le long d'une partie du corps du passager,
**caractérisé en ce que** la bande souple (42) de support du coussin (40) gonflable est munie, au voisinage de sa seconde extrémité libre (48), d'un pêne, ou d'une gâche, de raccordement (50) qui, en position d'utilisation du coussin (40), est reçu de manière libérable dans une gâche, ou respectivement sur un pêne, (54) agencée à la seconde extrémité (22) de la sangle (16) de ceinture (14), et **en ce que** la structure (20) du véhicule comporte un pêne, ou respectivement une gâche, fixe (46) d'ancrage de la seconde extrémité (22, 54) de la sangle (16) de ceinture (14) qui est reçu de manière libérable dans ladite gâche, ou respectivement sur ledit pêne, d'extrémité (54) de la sangle (16) de ceinture (14) lorsque le coussin (40) gonflable n'est pas en position d'utilisation.

2. Equipement selon la revendication précédente, **caractérisé en ce que** les moyens de gonflage du coussin (40) sont inhibés lorsque le coussin n'est pas en position d'utilisation.

3. Equipement selon la revendication précédente, **caractérisé en ce que** le pêne, ou respectivement la gâche, fixe (46) d'ancrage de la seconde extrémité (22, 54) de la sangle (16) de ceinture (14) est associé à des moyens qui commandent l'inhibition des moyens de gonflage lorsqu'il est reçu de manière libérable dans ladite gâche, ou respectivement sur ledit pêne, d'extrémité de la sangle de ceinture.

4. Equipement selon l'une quelconque des revendications précédentes, **caractérisé en ce que**, en position de rangement du coussin gonflable, le pêne, ou respectivement la gâche, de raccordement (50) porté par la bande de support est accroché sur un élément fixe (64) de rangement fixé à la structure (20) du véhicule, ou du siège (10).

5. Equipement selon la revendication précédente, **caractérisé en ce que** la bande souple (42) de support du coussin est munie d'une gâche de raccordement (50) qui ne peut être désolidarisée du pêne complémentaire agencée à la seconde extrémité (22) de la sangle (16) que lorsque la gâche (50) de raccordement est accrochée sur l'élément fixe de rangement (64).

6. Equipement selon l'une des revendication 4 ou 5, **caractérisé en ce que** l'élément fixe (64) de rangement est fixé sur la face interne d'un pied vertical (20) de la structure du véhicule en un point qui est décalé verticalement au-dessus du point d'ancrage de la première extrémité (44) de la bande souple (42) de support du coussin gonflable, de manière que, en position de rangement, ce dernier s'étende sensiblement verticalement le long de la face interne du pied.

7. Equipement selon l'une quelconque des revendications 4 à 6, **caractérisé en ce que** la face interne du pied vertical (20) comporte un logement (58) de rangement du coussin gonflable (40).

8. Equipement selon l'une quelconque des revendications 4 à 7, **caractérisé en ce que** le pêne, ou respectivement la gâche, fixe (46) d'ancrage de la seconde extrémité (22, 54) de la sangle (16) de ceinture (14) est fixé sur la face interne du pied vertical (20) à proximité du point d'ancrage de la première extrémité de la bande souple (42) de support du coussin gonflable (40).

9. Equipement selon l'une quelconque des revendications 1 à 7, **caractérisé en ce que** le pêne, ou respectivement la gâche, fixe (46) d'ancrage de la seconde extrémité (22, 54) de la sangle (16) de ceinture (14) est fixé sur un élément de la structure du siège.

10. Equipement selon l'une quelconque des revendications précédentes, **caractérisé en ce que**, en position d'utilisation du coussin gonflable (40), la bande de support du coussin gonflable constitue un tronçon d'un brin ventral (32) de la ceinture de sécurité (14).

11. Equipement selon l'une quelconque des revendications précédentes, **caractérisé en ce que** la ceinture de sécurité (12) comporte un pêne (28) d'accrochage de la ceinture de sécurité en position d'utilisation dont le corps est traversé par la sangle (16) et qui est prévu pour être reçu de manière libérable dans une gâche (30) fixée à la structure du véhicule.

12. Equipement selon l'une quelconque des revendications précédentes, **caractérisé en ce que** la première extrémité (18) de la sangle (16) de ceinture est associée à un dispositif de mise sous-tension de la sangle.

13. Equipement selon la revendication précédente, **caractérisé en ce que** la sangle (14) est mise sous tension selon un effort réglable au moins entre une valeur supérieure d'utilisation de la ceinture de sécurité sans le coussin gonflable (40) et une valeur inférieure d'utilisation combinée de la ceinture de sécurité et du coussin gonflable, et **en ce que** le réglage de ladite valeur est effectué automatiquement en fonction de l'état d'inhibition ou d'activation des moyens de gonflage du coussin gonflable.

## Claims

1. Security equipment (12) for protection of a passenger occupying a seat (10) of an automotive vehicle, of the type comprising:
- a safety belt (14) with a strap (16), the first and second extremities (18, 22) of which can be anchored to the structure of the vehicle, and an intermediate part (32, 34) of which is capable of occupying a stored position and a deployed position in which it extends along a part of the body of the passenger; and
- an inflatable bag (40) to hold the passenger in place in case of a collision, which is carried by a support that is moveable between a stored position and a deployed position in which the un-inflated support and bag (40) extend along a part of the body of the passenger,
and of the type wherein the support of the inflatable bag is a flexible band (42) independent of the strap (16) of the belt (14), a first extremity (44) of which is anchored to the structure of the vehicle, to the foot or to the framework of the seat, and an intermediate part of which extends, when the inflatable bag is deployed, along a part of the body of the passenger, **characterised in that** the flexible band (42) for supporting the inflatable bag (40) is fitted in the proximity of its second free extremity (48) with a connecting bolt or keeper (50), which, when the bag (40) is in the deployed position, is received in a releasable manner in a keeper or respectively onto a bolt (54) formed at the second extremity (22) of the strap (16) of the belt (14), and **in that** the structure (20) of the vehicle comprises a fixed bolt or respectively a fixed keeper (46) for anchoring the second extremity (22, 54) of the strap (16) of the belt (14), which is received in a releasable manner in said keeper or respectively onto said bolt at the extremity (54) of the strap (16) of the belt (14) when the inflatable bag (40) is not in the deployed position.

2. Equipment according to the preceding claim, **characterised in that** the means for inflating the bag (40) are inhibited when the bag is not in the deployed position.

3. Equipment according to the preceding claim, **characterised in that** the fixed bolt or respectively the fixed keeper for anchoring the second extremity (22, 54) of the strap (16) of the belt (14) is connected to means that inhibit inflating means when it is received in a releasable manner in said keeper or respectively onto said bolt at the extremity of the belt strap.

4. Equipment according to any one of the preceding claims, **characterised in that** when the inflatable bag is in the stored position, the connecting bolt or respectively the connecting keeper (50) carried by the supporting band is hooked onto a fixed storage element (64) fixed to the structure (20) of the vehicle or of the seat (10).

5. Equipment according to the preceding claim, **characterised in that** the flexible band (42) for supporting the bag is fitted with a connecting keeper (50) that can only be disconnected from the complementary bolt formed. at the second extremity (22) of the strap (16) when the keeper (50) for connecting is hooked onto the fixed storage element (64).

6. Equipment according to one of claims 4 or 5, **characterised in that** the fixed storage element (64) is fixed onto the internal face of a vertical foot (20) of the structure of the vehicle at a point that a vertically offset above the anchoring point of the first extremity (44) of the flexible band (42) for supporting the inflatable bag, such that in the stored position said bag extends substantially vertically along the internal face of the foot.

7. Equipment according to any one of claims 4 to 6, **characterised in that** the internal face of the vertical foot (20) comprises a housing (58) for storing the inflatable bag (40).

8. Equipment according to any one of claims 4 to 7, **characterised in that** the fixed bolt or respectively the fixed keeper (46) for anchoring the second extremity (22, 54) of the strap (16) of the belt (14) is fixed onto the internal face of the vertical foot (20) in the proximity of the anchoring point of the first extremity of the flexible band (42) for supporting the inflatable bag (40).

9. Equipment according to any one of claims 1 to 7, **characterised in that** the fixed bolt or respectively the fixed keeper (46) for anchoring the second extremity (22, 54) of the strap (16) of the belt (14) is fixed onto an element of the structure of the seat.

10. Equipment according to any one of the preceding claims, **characterised in that** in the deployed position of the inflatable bag (40) the band for suppotting the inflatable bag constitutes a section of a ventral portion (32) of the safety belt (14).

11. Equipment according to any one of the preceding claims, **characterised in that** the safety belt (12) comprises a bolt (28) for hooking the safety belt in the deployed position, the body of which is crossed through by the strap (16) and which is provided in order to be received in a releasable manner in a keeper (30) fixed to the structure of the vehicle.

12. Equipment according to any one of the preceding claims, **characterised in that** the first extremity (18) of the belt strap (16) is connected to a device for tensioning the strap.

13. Equipment according to the preceding claim, **characterised in that** the strap (14) is tensioned according to a force adjustable at least between an upper value for using the safety belt without the inflatable bag (40) and a lower value for combined use of the safety belt and the inflatable bag, and **in that** the adjustment of said value is automatically effected according to the state of inhibition or activation of the inflation means of the inflatable bag.

## Patentansprüche

1. Sicherheitsausrüstung (12) zum Schutz eines einen Sitz (10) eines Kraftfahrzeuges einnehmenden Passagiers, mit:
- einem Sicherheitsgurt (14) der ein Gurtband (16) aufweist, dessen beide Enden (18, 22) am Aufbau des Fahrzeuges verankert werden können und wobei ein Zwischenteil (32, 34) eine Ruhestellung und eine Einsatzstellung einnehmen kann, in der es sich entlang eines Teils des Körpers des Passagiers erstreckt und mit
- einem aufblasbaren Kissen (40) zum Zurückhalten des Passagiers im Fall einer Kollision, das von einer Halterung getragen wird, das zwischen einer Ruhestellung und einer Einsatzstellung beweglich ist, in der die Halterung und das nicht aufgeblasene Kissen (40) sich entlang eines Teils des Körpers des Passagiers erstrecken, wobei die Halterung des aufblasbaren Kissens ein biegsames Band (42) ist, das unabhängig vom Gurtband (16) des Sicherheitsgurtes (14) ist, dessen erstes Ende (44) am Aufbau des Fahrzeuges verankert ist und dessen Zwischenteil in der Einsatzstellung des aufblasbaren Kissens sich entlang eines Teils des Körpers des Passagiers erstreckt,
**dadurch gekennzeichnet, dass** das biegsame Tragband (42) des aufblasbaren Kissens (40) in der Nähe seines zweiten freien Endes (48) mit einer Verbindungsklinke oder mit einer Verbindungsschliesse (50) versehen ist, die in der Einsatzstellung des Kissens (40) in lösbarer Weise in eine Schliesse, bzw. Klinke, (54) eingreift, die am zweiten Ende (22) des Gurtbandes (16) des Sicherheitsgurtes (14) angeordnet ist und dass der Aufbau (20) des Fahrzeuges eine feststehende Verankerungsklinke, bzw. eine Verankerungsschliesse, (46) aufweist für das zweite Ende (22, 54) des Gurtbandes (16)
- des Sicherheitsgurtes (14), die in lösbarer Weise in die Schliesse, bzw. die Klinke, am Ende (54) des Gurtbandes (16) des Sicherheitsgurtes (14) eingreift, wenn sich das aufblasbare Kissen (40) nicht in der Einsatzstellung befindet.

2. Ausrüstung nach dem vorhergehenden Anspruch, **dadurch gekennzeichnet, dass** die Anordnung zum Aufblasen des Kissens (40) ausgeschaltet ist, wenn sich das Kissen nicht in der Einsatzstellung befindet.

3. Ausrüstung nach dem vorhergehenden Anspruch, **dadurch gekennzeichnet, dass** die feststehende Verankerungsklinke, bzw. Verankerungsschliesse (46) für das zweite Ende (22, 54) des Gurtbandes (16) des Sicherheitsgurtes (14) einer Anordnung zugeordnet ist, die die Anordnung zum Aufblasen ausschaltet, wenn sie in lösbarer Weise in die Schliesse, bzw. Klinke, am Ende des Gurtbandes des Sicherheitsgurtes eingreift.

4. Ausrüstung nach einem der vorhergehenden Ansprüche, **dadurch gekennzeichnet, dass** die Verbindungsklinke, bzw. die Verbindungsschliesse (50), die mit dem Tragband verbunden ist, in der Ruhestellung des aufblasbaren Kissens an einem feststehenden Halteteil (64) für die Ruhestellung eingehängt ist, das am Aufbau (20) des Fahrzeugs oder des Sitzes (10) befestigt ist.

5. Ausrüstung nach dem vorhergehenden Anspruch, **dadurch gekennzeichnet, dass** das biegsame Tragband (42) des Kissens mit einer Verbindungsschliesse (50) versehen ist, die nur dann von der komplementären, am zweiten Ende (22) des Gurtbandes (16) angeordneten Klinke getrennt werden kann, wenn die Verbindungsschliesse (50) am feststehenden Halteteil (64) für die Ruhestellung eingehängt ist.

6. Ausrüstung nach einem der Ansprüche 4 oder 5, **dadurch gekennzeichnet, dass** das feststehende Halteteil (64) für die Ruhestellung an der inneren Seite eines senkrechten Pfostens (20) des Aufbaus des Fahrzeuges an einer Stelle befestigt ist, die in senkrechter Richtung oberhalb der Verankerungsstelle für das erste Ende (44) des biegsamen Tragbandes (42) des aufblasbaren Kissens derart verschoben ist, dass letzteres in der Ruhestellung sich im wesentlichen in senkrechter Richtung entlang der inneren Seite des Pfostens erstreckt.

7. Ausrüstung nach einem der Ansprüche 4 bis 6, **dadurch gekennzeichnet, dass** die innere Seite des senkrechten Pfostens (20) mit einer Aufnahmeaussparung (58) für das aufblasbare Kissen (40) versehen ist.

8. Ausrüstung nach einem der Ansprüche 4 bis 7, **dadurch gekennzeichnet, dass** die feststehende Verankerungsklinke, bzw. Verankerungsschliesse (46) für das zweite Ende (22, 54) des Gurtbandes (16) des Sicherheitsgurtes (14) an der inneren Seite des senkrechten Pfostens (20) in der Nähe der Verankerungsstelle für das erste Ende des biegsamen Tragbandes (42) des aufblasbaren Kissens (40) befestigt ist.

9. Ausrüstung nach einem der Ansprüche 1 bis 7, **dadurch gekennzeichnet, dass** die feststehende Verankerungsklinke, bzw. Verankerungsschliesse, (46) für das zweite Ende (22, 54) des Gurtbandes (16) des Sicherheitsgurtes (14) an einem Bauteil des Sitzaufbaus befestigt ist.

10. Ausrüstung nach einem der vorhergehenden Ansprüche, **dadurch gekennzeichnet, dass** in der Einsatzstellung des aufblasbaren Kissens (40) das Tragband des aufblasbaren Kissens einen Abschnitt des Beckengurtes (32) des Sicherheitsgurtes (14) bildet.

11. Ausrüstung nach einem der vorhergehenden Ansprüche, **dadurch gekennzeichnet, dass** der Sicherheitsgurt (12) eine Klinke (28) zum Einhängen des Sicherheitsgurtes in der Einsatzstellung aufweist, von dem ein Teil vom Gurtband (16) durchsetzt wird und die dazu dient, in lösbarer Weise in eine Schliesse (30) einzugreifen, die am Aufbau des Fahrzeuges befestigt ist.

12. Ausrüstung, nach einem der vorhergehenden Ansprüche, **dadurch gekennzeichnet, dass** das erste Ende (18) des Gurtbandes (16) einem Gurtstraffer für das Gurtband zugeordnet ist.

13. Ausrüstung nach dem vorhergehenden Anspruch, **dadurch gekennzeichnet, dass** das Gurtband (14) gestrafft wird mit einer Kraft, die einstellbar ist zwischen mindestens einem oberen Wert für den Einsatz des Sicherheitsgurtes ohne das aufblasbare Kissen (40) und einem unteren Wert für den gemeinsamen Einsatz des Sicherheitsgurtes mit dem aufblasbaren Kissen und dass die Einstellung des Wertes automatisch als Funktion des deaktivierten oder aktivierten Zustandes der Anordnung zum Aufblasen des aufblasbaren Kissens erfolgt.
